# FASCICULE DE BREVET EUROPEEN

(11) **EP 2 836 350 B1**
(45) Date de publication et mention de la délivrance du brevet: **01.06.2016**
(21) Numéro de dépôt: 13715686.5
(22) Date de dépôt: 10.04.2013
(51) Int. Cl.: B29C 51/26

(54) **DISPOSITIF DE THERMOFORMAGE D'UNE FEUILLE**
VORRICHTUNG ZUM THERMOFORMEN EINER FOLIE
APPARATUS FOR THERMOFORMING A FOIL

(30) Priorité: 13.04.2012 FR 1253410
(43) Date de publication de la demande: 18.02.2015
(73) Titulaire: Faurecia Automotive Industrie, 92000 Nanterre (FR)
(72) Inventeur: LIAUD, Didier, F-08140 Pouru Saint Remy (FR)
(74) Mandataire: Blot, Philippe Robert Emile
(86) Numéro de dépôt international: PCT/EP2013/057517
(87) Numéro de publication internationale: WO 2013/153131

(56) Documents cités:
- EP-A2- 0 463 328
- WO-A1-95/01248
- WO-A2-2010/087977
- DE-A1- 10 306 607

## Description

La présente invention concerne un dispositif de thermoformage d'une feuille de matériau, notamment de type « masse lourde ».

On connaît déjà dans l'état de la technique un dispositif de thermoformage d'une feuille de matériau, du type comportant :
- des moyens de chauffage de la feuille,
- un outil de conformage, sur lequel la feuille est destinée à être déposée après chauffage, agencé sensiblement en dessous des moyens de chauffage, et
- un ensemble de convoyage de la feuille.

Un dispositif de thermoformage est notamment décrit dans WO 95/01248.

Habituellement, les moyens de chauffage comportent un ensemble de chauffage par infrarouge, mobile verticalement en translation entre une position haute de retrait, et une position basse de chauffage.

L'ensemble de convoyage comporte un tablier, de forme sensiblement plane, s'étendant longitudinalement entre des première et seconde extrémités. L'ensemble de convoyage comporte également une bande de convoyage, portée par le tablier et mobile par rapport à ce tablier, destinée à recevoir la feuille à thermoformer, et à convoyer cette feuille entre les première et seconde extrémités du tablier.

Le tablier est mobile en translation par rapport à un support de l'ensemble de convoyage, entre une première position de chargement d'une feuille sur la bande de convoyage à proximité de la première extrémité du tablier, et une seconde position de chauffage de la feuille, dans laquelle la seconde extrémité du tablier est disposée à proximité des moyens de chauffage.

Ce dispositif de thermoformage permet de réaliser un procédé de thermoformage comportant les étapes écrites ci-dessous.

Au cours d'une première étape de chargement, le tablier, dans sa première position, est disposé à un poste de chargement. Ledit poste de chargement comporte des moyens pour prélever une feuille depuis une réserve, et pour déposer cette feuille prélevée sur la bande de convoyage, à proximité de la première extrémité du tablier.

Au cours d'une seconde étape, le tablier se déplace en translation jusqu'à sa seconde position. Au cours de cette même étape, la bande de convoyage est actionnée pour convoyer la feuille jusqu'à la seconde extrémité du tablier. Ainsi, au terme de cette étape, la feuille est disposée en dessous des moyens de chauffage.

Au cours d'une troisième étape, l'ensemble de chauffage est déplacé jusqu'à sa position basse de chauffage, et augmente la température de la feuille de matériau, afin de la rendre malléable.

Une fois la feuille rendue malléable, le procédé comporte une quatrième étape de dépôt de la feuille sur l'outil de conformage, cette quatrième étape étant également appelée « nappage ». A cet effet, le tablier de l'ensemble de convoyage recule en direction de sa première position, alors que la bande de convoyage convoie la feuille dans le sens opposé, au-delà de la seconde extrémité du tablier. La feuille est ainsi déposée progressivement sur l'outil de conformage.

Dans certains cas, l'outil de conformage présente des reliefs importants, par exemple lorsque la feuille est une masse lourde destinée à équiper un revêtement de tablier d'habitacle de véhicule automobile. Dans ce cas, la distance entre le tablier de l'ensemble de convoyage, depuis lequel est déposée la feuille, et l'outil de conformage, sur lequel est déposée la feuille, peut présenter des variations importantes, notamment des variations pouvant atteindre 500 mm. Ainsi, il arrive que la feuille, sous l'effet de son poids, subisse des déformations, notamment des étirements, dans les zones où la distance entre le tablier et l'outil est importante.

Par ailleurs, un tel procédé de thermoformage peut entraîner des glissements de la feuille, ou la formation de plis sur la feuille, essentiellement en début ou en fin de l'étape de dépôt sur l'outil de formage, provoquant ainsi localement des surépaisseurs ou des défauts de matière.

Ainsi, la pièce issue du thermoformage d'une feuille par ce procédé peut comporter des défauts de qualité indésirables.

Il est possible de limiter ces défauts de qualité par l'intervention d'au moins un opérateur, qui soutient et guide manuellement la feuille par ses bords pendant le dépôt de cette feuille sur l'outil de conformage, afin d'éviter un étirement de cette feuille. Toutefois, une telle intervention humaine ne permet pas une grande précision, si bien que des défauts peuvent subsister. En outre, la reproductibilité des pièces ainsi thermoformées n'est pas assurée.

L'invention a notamment pour but de remédier à ces inconvénients, en fournissant un dispositif de thermoformage limitant les défauts de qualité sur la pièce thermoformée, sans qu'une intervention humaine soit nécessaire.

A cet effet, l'invention a pour objet un dispositif de thermoformage d'une feuille de matériau, du type comportant :
- des moyens de chauffage de la feuille,
- un outil de conformage, sur lequel la feuille est destinée à être déposée après chauffage, agencé sensiblement en dessous des moyens de chauffage, et
- un ensemble de convoyage de la feuille, comprenant :
   - un tablier, de forme sensiblement plane, s'étendant longitudinalement entre des première et seconde extrémités,
   - une bande de convoyage, portée par le tablier, et mobile par rapport à ce tablier, destinée à recevoir la feuille à thermoformer, et à convoyer ladite feuille entre les première et seconde extrémités du tablier,
dans lequel le tablier est mobile en translation par rapport à un support de l'ensemble de convoyage, entre une première position de chargement d'une feuille sur la bande de convoyage à proximité de la première extrémité du tablier, et une seconde position de chauffage de la feuille, dans laquelle la seconde extrémité du tablier est disposée à proximité des moyens de chauffage,
caractérisé en ce que l'ensemble de convoyage comporte :
- une tête agencée à la seconde extrémité du tablier, ladite tête étant mobile en rotation autour d'un axe transversal,
- des moyens d'entraînement en rotation de la tête, propres à faire basculer ladite tête autour de l'axe transversal, notamment en direction de l'outil de conformage.

Grâce à la tête mobile, la feuille n'est pas déposée depuis la seconde extrémité du tablier, mais depuis une extrémité libre de la tête, dont la hauteur peut varier par rotation de cette tête autour de l'axe transversal.

En actionnant la rotation de la tête en fonction du relief de l'outil de conformage, il est possible de conserver une distance sensiblement constante et peu élevée entre l'extrémité libre de la tête depuis laquelle la feuille est déposée et l'outil de conformage. Ainsi, le dispositif selon l'invention ne présente pas l'inconvénient de l'état de la technique lié aux fortes variations de cette distance.

La feuille est donc déposée de manière précise et efficace sur l'outil de conformage, sans générer de déformation de cette feuille.

Un dispositif de thermoformage selon l'invention peut en outre comporter l'une ou plusieurs des caractéristiques suivantes, prises seules ou selon toutes les combinaisons techniquement envisageables.
- La tête mobile comporte deux flasques latérales, présentant chacune une forme allongée entre une extrémité liée au tablier par une liaison pivot autour dudit axe transversal, et une extrémité libre, et un rouleau transversal, de préférence motorisé, relié à l'extrémité libre de chaque flasque latérale par une liaison pivot.
- Le rouleau transversal présente un diamètre inférieur à 80 mm.
- Chaque flasque latérale de la tête mobile comprend une extension à son extrémité libre, la tête mobile comportant une traverse s'étendant entre les extensions de ces flasques latérales, ladite traverse délimitant, avec le rouleau transversal, un passage pour la feuille.

- La tête mobile comporte des moyens de détection d'un contact entre cette tête mobile et l'outil de conformage, l'ensemble de convoyage comportant des moyens pour désactiver les moyens d'entraînement en rotation de la tête lorsqu'un contact est détecté.
- Les moyens de détection de contact comportent une partie mobile en rotation autour d'une liaison pivot avec les flasques de la tête, entre une position angulaire basse et une position angulaire haute, comprenant une traverse de sécurité s'étendant sensiblement parallèlement au rouleau transversal, et au moins un interrupteur, porté par au moins l'une des flasques de la tête, destiné à coopérer avec la partie mobile lorsque celle-ci se déplace depuis sa partie angulaire basse jusqu'à sa partie angulaire haute.
- Les moyens d'entraînement en rotation de la tête sont programmables, notamment pour que la tête suive un trajet correspondant sensiblement à un profil de l'outil de conformage lorsque le tablier se déplace depuis sa seconde position en direction de sa première position, de sorte que la distance entre le rouleau transversal et l'outil reste sensiblement constante.
- Le dispositif de thermoformage est prévu pour le thermoformage d'une feuille en matériau de type « masse lourde ».

L'invention sera mieux comprise à la lecture de la description qui va suivre, donnée uniquement à titre d'exemple et faite en se référant aux figures annexées parmi lesquelles :
- la figure 1 est une vue de profil d'un dispositif de thermoformage selon un exemple de mode de réalisation de l'invention comportant un ensemble de convoyages représenté dans une première position ;
- la figure 2 est une vue similaire à la figure 1, dans laquelle l'ensemble de convoyage est représenté dans une seconde position ;
- la figure 3 est une vue de profil d'une tête mobile de l'ensemble de convoyage du dispositif des figures 1 et 2, représentée dans deux positions angulaires ;
- la figure 4 est une vue de profil de la tête mobile de la figure 3, représentée dans six positions différentes lors de la dépose d'une feuille de matériau sur un outil de conformage.

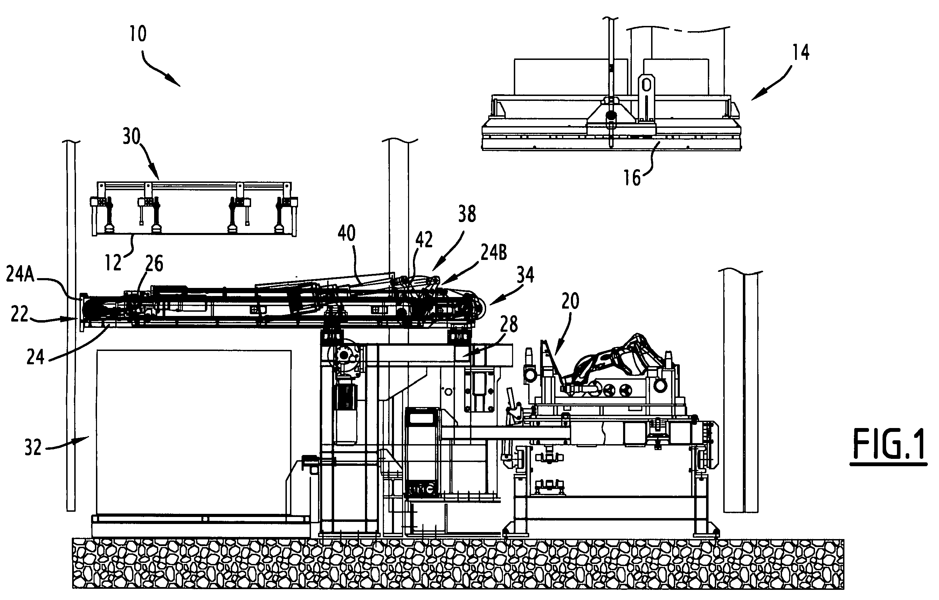

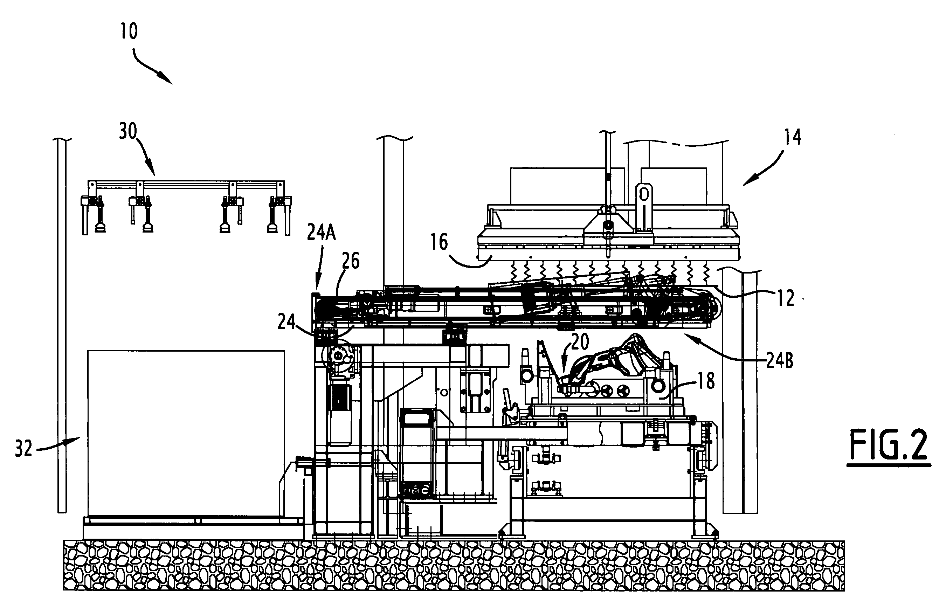

On a représenté sur les figures 1 et 2 un dispositif 10 de thermoformage d'une feuille de matériau 12.

La feuille de matériau 12 est par exemple réalisée dans un matériau de type « masse lourde », et destinée pour la réalisation d'une pièce d'isolation acoustique, en particulier d'un revêtement pour un plancher ou un tablier d'habitacle de véhicule automobile, et/ou pour la réalisation d'une pièce d'habillage, notamment pour un véhicule automobile.

Une telle feuille 12 présente généralement une masse surfacique comprise entre 2 et 7 kg/m², et une masse volumique relativement élevée, de l'ordre de 2000 kg/m³. Par exemple, la feuille 12 est réalisée dans des matériaux thermoplastiques à base de polyoléfine, de copolymère d'éthylène et d'acétate de vinyle, de polymère Ethylène Propylène Diène Monomère (EPDM) ou d'un mélange de ces polymères. Elle comporte également de préférence des charges à base de craie ou de sulfate de baryum.

Habituellement, la feuille 12 est destinée, après son thermoformage par le dispositif de thermoformage 10, à être rapportée dans un moule de moussage, où elle sera associée à une mousse, généralement une mousse de polyuréthane, pour constituer une pièce d'isolation acoustique du type « masse / ressort ».

Le dispositif de thermoformage 10 comporte des moyens 14 de chauffage de la feuille. Ces moyens 14 de chauffage comportent par exemple un ensemble 16 de chauffage par Infrarouge, mobile verticalement entre une position de repos, représentée sur la figure 1, et une position de chauffage, représentée sur la figure 2. Les moyens de chauffage 14 sont classiques, et ne seront donc pas décrits davantage.

Le dispositif de thermoformage 10 comporte également un outil de conformage 18, sur lequel la feuille est destinée à être déposée après chauffage, comme cela sera décrit ultérieurement. Cet outil de conformage 18 est agencé sensiblement en dessous des moyens de chauffage 14. Dans l'exemple représenté, l'outil de conformage présente un relief 20 présentant de fortes variations de hauteur. Ce relief 20 dépend de la forme que l'on désire donner à la feuille 12. L'outil de conformage 18 est classique, et ne sera donc pas décrit davantage.

Un tel outil de conformage 18 permet de réaliser une opération de thermoformage connue, dans laquelle la feuille 12 de masse lourde formée de polymères thermoplastiques est déposée sur l'outil de conformage 18, après avoir été chauffée au-delà d'un point de ramollissement de ces polymères. La feuille 12 se déforme alors sur l'outil de conformage 18, afin d'épouser le relief 20 de cet outil de conformage 18. La feuille 12 est ensuite refroidie durant quelques secondes, afin de durcir en maintenant sa forme. Après refroidissement, la feuille 12 peut être saisie pour être rapportée dans le moule de moussage mentionné précédemment.

Le dispositif de thermoformage 10 comporte par ailleurs un ensemble 22 de convoyage de la feuille de matériau 12. Cet ensemble de convoyage 12 comprend un tablier 24, de forme sensiblement plane, s'étendant longitudinalement entre une première extrémité 24A et une seconde extrémité 24B.

L'ensemble de convoyages 22 comporte également une bande de convoyages 26, portée par le tablier 24, et mobile par rapport à ce tablier 24. Cette bande de convoyage 26 est destinée à recevoir la feuille 12 à thermoformer, et à convoyer ladite feuille 12 entre les première 24A et seconde 24B extrémités du tablier 24.

Le tablier 24 est mobile en translation par rapport à un support 28 de l'ensemble de convoyage 22. Ce tablier 24 est mobile entre une première position de chargement d'une feuille 12 sur la bande de convoyage 26 à proximité de la première extrémité 24A du tablier 24, tel que cela est représenté sur la figure 1, et une seconde position de chauffage de la feuille 12, dans laquelle la seconde extrémité 24B du tablier est disposée sensiblement à proximité des moyens de chauffage 14, tel que cela est représenté sur la figure 2.

On notera que le tablier 24, la bande de convoyage 26 et le support 28 sont classiques, si bien que leur fonctionnement ne sera pas détaillé davantage.

Le dispositif de thermoformage 10 comporte par ailleurs des moyens classiques de chargement 30, propres à récupérer une feuille de matériau 12 sur une pile de réserve 32 pour la déposer sur la bande de convoyage 26 lorsque le tablier 24 est dans sa première position.

Afin de permettre un dépôt (également appelé « nappage ») précis de la feuille 12 après chauffage sur l'outil de conformage 18, l'ensemble de convoyages 22 comporte une tête mobile 34, agencée à la seconde extrémité 24B du tablier 24 de manière à prolonger ce tablier 24 au-delà de cette seconde extrémité 24B. Ladite tête 34 est reliée à la seconde extrémité 24B au moyen d'une liaison pivot autour d'un axe transversal 36, si bien que cette tête 34 est mobile en rotation autour de cet axe transversal 36.

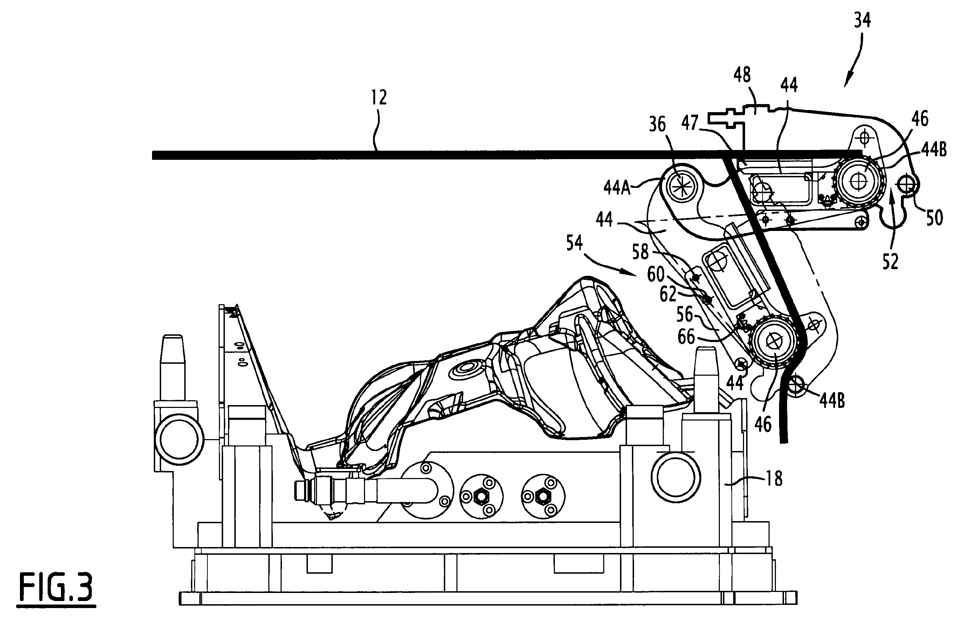

L'ensemble de convoyage 22 comporte des moyens 38 d'entraînement en rotation de la tête 34, propres à faire basculer cette tête 34 vers le bas autour de l'axe transversal 36. Ainsi, la tête 34 est propre à basculer en direction de l'outil de conformage 18, comme cela représenté sur la figure 3. Les moyens d'entraînement 38 comportent par exemple au moins un vérin 40 et une bielle 42, ladite bielle 42 étant solidaire de la tête 34 et entraînée en mouvement par le vérin 40 pour entraîner la rotation de la tête 34 autour de l'axe transversal 36.

Conformément au mode de réalisation décrit, la tête mobile 34 comporte deux flasques latérales 44, présentant chacune une forme allongée entre une extrémité 44A liée au tablier par la liaison pivot autour de l'axe transversal 36, et une extrémité libre 44B. On notera que la distance entre les flasques latérales 44 est supérieure à la largeur des feuilles 12 à thermoformer, et sensiblement égale à la largeur du tablier 24.

La tête mobile 34 comporte par ailleurs un rouleau transversal 46, relié à l'extrémité libre 44B de chaque flasque latérale par une liaison pivot. Le rouleau transversal 46 est de préférence motorisé, afin de participer à l'entraînement de la feuille 12 lors de son dépôt sur l'outil de conformage 18, comme cela sera décrit ultérieurement. Avantageusement, ledit rouleau transversal 46 présente un diamètre inférieur à 80 mm. En effet, un diamètre supérieur à 80 mm rendrait difficile l'application de la feuille 12 sur l'outil de conformage 18, car la feuille 12 aurait alors tendance à adhérer au rouleau transversal 46.

De préférence, la tête mobile 34 comporte également une plaque 47 de guidage, portée par les flasques 44 et s'étendant longitudinalement sensiblement entre la seconde extrémité 24B du tablier et le rouleau transversal 46. Ainsi, une feuille 12 convoyée par la bande de convoyage 26 au-delà de la seconde extrémité 24B est guidée par cette plaque 47 jusqu'au rouleau transversal 46. La plaque 47 est par exemple repliée latéralement de façon à présenter une section transversale en forme de U, dont les branches sont chacune fixée à une flasque 44 respective.

Avantageusement, la tête mobile 34 comprend une traverse 50 s'étendant parallèlement au rouleau transversal 46, de façon à délimiter, avec ce le rouleau transversal 46, un passage 52 pour la feuille 12. De préférence, la traverse 50 est formée par un rouleau libre en rotation autour de son axe (également appelé rouleau fou), de sorte que cette traverse 50 n'induise pas de frottement avec la feuille 12 lorsque celle-ci passe dans le passage 52 en contact avec la traverse 50.

La tête mobile 34 comporte par exemple un boîtier de logement 48, solidaire des flasques 44, et dans lequel sont notamment logés les flasques 44 et le rouleau transversal. Ce boîtier 48 comporte des parois latérales entre lesquelles s'étend la traverse 50.

Avantageusement, la tête mobile 34 comporte des moyens 54 de détection d'un contact entre cette tête mobile 34 et l'outil de conformage 18. L'ensemble de convoyage 22 comporte alors des moyens pour désactiver les moyens d'entraînement 38 en rotation de la tête 34 lorsqu'un contact est détecté. Ainsi, ces moyens de détection 54 et ces moyens de désactivation forment ensemble un dispositif de sécurité permettant d'éviter l'endommagement de l'outil de conformage 18 par un choc ou une contrainte appliqué par la tête mobile 34.

Dans l'exemple représenté, les moyens de détection de contact 54 comportent une partie 56 mobile en rotation autour d'une liaison pivot 58 avec les flasques 44 de la tête 34, entre une position angulaire basse et une position angulaire haute. Les positions angulaires basse et haute sont par exemple délimitées au moyen d'une cheville 60 passant à travers un orifice oblong 62, les positions angulaires haute et basse étant définies par les extrémités de cet orifice oblong 62.

La partie mobile 56 comporte par exemple deux plaquettes latérales, chacune étant reliée à une flasque 44 respective, et une traverse de sécurité 64 s'étendant entre ces plaquettes latérales, sensiblement parallèlement au rouleau transversal 46. Ainsi, un contact de la traverse de sécurité 64 avec l'outil de conformage 18 entraîne le déplacement des plaquettes mobiles en rotation depuis sa position angulaire basse en direction de sa position angulaire haute.

Les moyens de désactivation comportent au moins un interrupteur 66, porté par au moins l'une des flasques latérales 44, destiné à coopérer avec la plaquette mobile 56 lorsqu'elle se déplace depuis sa partie angulaire basse en direction de sa partie angulaire haute. Ainsi, cet interrupteur 66 est actionné lorsque la traverse de sécurité 64 entre en contact avec l'outil de conformage 18.

Avantageusement, les moyens 38 d'entraînement en rotation de la tête 34 sont programmables. Ainsi, on peut programmer les mouvements de la tête 34 pour que cette tête 34 suive un trajet correspondant sensiblement à un profil de l'outil de formage 18 lorsque le tablier 24 se déplace depuis sa seconde position en direction de sa première position pour le nappage de la feuille 12 sur l'outil de conformage 18.

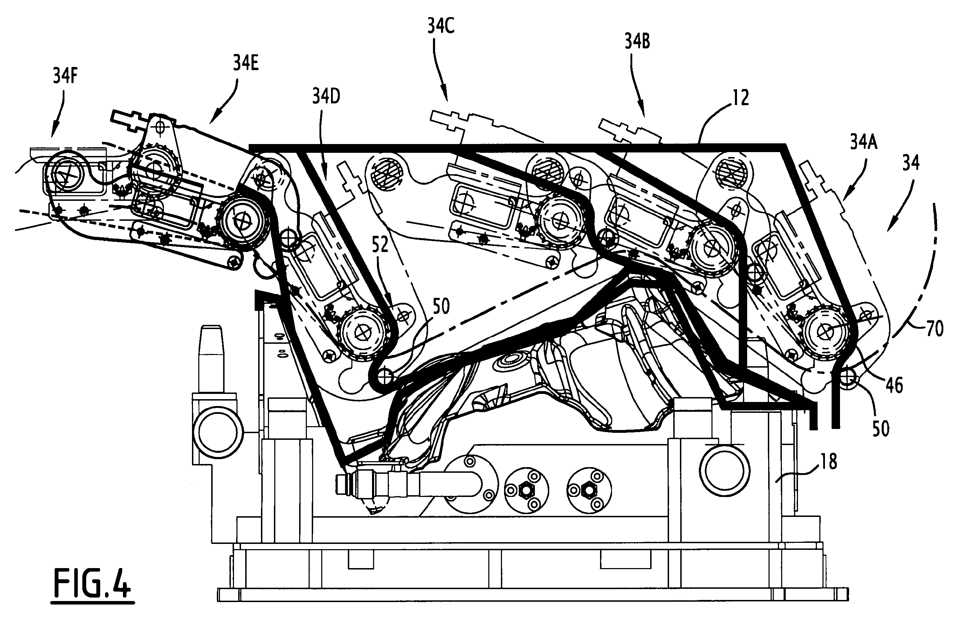

On a représenté sur la figure 4 six positions successives 34A à 34F de la tête 34 lors du nappage de la feuille 12 sur l'outil de conformage 18.

Dans la première position 34A, la tête 34 est basculée, de sorte que l'extrémité libre 44B soit approchée de l'outil de conformage 18. Ainsi, la distance entre cette extrémité libre 44B et l'outil de conformage 18 est réduite, ce qui permet un nappage plus précis de la feuille 12 sur cet outil 18.

Le nappage de la feuille 12 est réalisé en reculant le tablier 24 depuis sa seconde position en direction de sa première position, alors que la bande de convoyage 26 et le rouleau transversal 46 entraînent la feuille 12 dans la direction opposée.

Afin que la distance entre le rouleau transversal 46 et l'outil 18 reste faible et sensiblement constante, l'inclinaison de la tête 34 est variable en fonction du relief 20 de l'outil de conformage 18. Ainsi, dans l'exemple représenté, l'inclinaison de la tête mobile 34 par rapport à l'horizontale diminue dans ses deuxième 34B et troisième 34C positions, puis augmente de nouveau dans sa quatrième position 34D. Puis cette inclinaison diminue de nouveau dans la cinquième position 34E, avant de revenir dans une position sensiblement horizontale 34F lorsque l'ensemble de la feuille 12 a été déposé sur l'outil 18. Ainsi, l'extrémité libre 34B de la tête 34 suit donc une trajectoire 70 suivant sensiblement le relief 20 de l'outil de conformage 18.

On notera que, dans la quatrième position représentée 34D, la tête 34 est fortement inclinée par rapport à l'horizontale, alors qu'il ne reste qu'une faible portion de la feuille 12 sur la bande de convoyage 26. Dans ce cas, il peut survenir que cette portion restante de la feuille 12 chute sous l'effet du poids de cette feuille 12, depuis la bande de convoyage 26 en direction de l'outil de conformage 18. La traverse libre 50 décrite précédemment est prévue à cet effet, pour retenir cette portion de feuille 12 en cas de chute, plutôt que de laisser cette portion de feuille 12 venir se déposer de manière désordonnée sur l'outil de conformage 18. En effet, grâce à cette traverse 50, la feuille 12 est retenue et continue son nappage en passant à travers le passage 52, qui poursuit la même trajectoire 70 même en cas de chute de la feuille 12 sur la traverse 50. Ainsi, le nappage de la feuille 12 sur l'outil de conformage 18 peut continuer sans inconvénient notable.

Il apparaît clairement que le dispositif de thermoformage 10 selon l'invention permet un nappage précis de la feuille 12 sur l'outil de conformage 18, et cela sans nécessiter d'intervention manuelle.

On notera que l'invention n'est pas limitée au mode de réalisation précédemment décrit, mais pourrait présenter diverses variantes sans sortir du cadre des revendications.

En particulier, la position de l'ensemble de chauffage à Infrarouge 16, ainsi que la position des moyens de chargement 30, peuvent varier en fonction du dispositif de thermoformage considéré.

## Revendications

1. Dispositif (10) de thermoformage d'une feuille de matériau (12), du type comportant :
- des moyens (14) de chauffage de la feuille (12),
- un outil de conformage (18), sur lequel la feuille (12) est destinée à être déposée après chauffage, agencé sensiblement en dessous des moyens de chauffage (14), et
- un ensemble (22) de convoyage de la feuille (12), comprenant :
• un tablier (24), de forme sensiblement plane, s'étendant longitudinalement entre des première (24A) et seconde (24B) extrémités,
• une bande de convoyage (26), portée par le tablier (24), et mobile par rapport à ce tablier (24), destinée à recevoir la feuille (12) à thermoformer, et à convoyer ladite feuille (12) entre les première (24A) et seconde (24B) extrémités du tablier (24),
dans lequel le tablier (24) est mobile en translation par rapport à un support (28) de l'ensemble de convoyage (22), entre une première position de chargement d'une feuille (12) sur la bande de convoyage (26) à proximité de la première extrémité (24A) du tablier (24), et une seconde position de chauffage de la feuille (12), dans laquelle la seconde extrémité (24B) du tablier (24) est disposée à proximité des moyens de chauffage (14), **caractérisé en ce que** l'ensemble de convoyage (22) comporte :
- une tête (34) agencée à la seconde extrémité (24B) du tablier (24), ladite tête (34) étant mobile en rotation autour d'un axe transversal (36),
- des moyens (38) d'entraînement en rotation de la tête (34), propres à faire basculer ladite tête (34) autour de l'axe transversal (36), notamment en direction de l'outil de conformage (18).

2. Dispositif de thermoformage (10) selon la revendication 1, dans lequel la tête mobile (34) comporte :
- deux flasques latérales (44), présentant chacune une forme allongée entre une extrémité (44A) liée au tablier (24) par une liaison pivot autour dudit axe transversal (36), et une extrémité libre (44B),
- un rouleau transversal (46), de préférence motorisé, relié à l'extrémité libre (44B) de chaque flasque latérale (44) par une liaison pivot.

3. Dispositif de thermoformage (10) selon la revendication 2, dans lequel le rouleau transversal (46) présente un diamètre inférieur à 80 mm.

4. Dispositif de thermoformage (10) selon la revendication 2 ou 3, dans lequel chaque flasque latérale (44) de la tête mobile (34) comprend une extension (48) à son extrémité libre (44B), la tête mobile (34) comportant une traverse (50) s'étendant entre les extensions (48) de ces flasques latérales (44), ladite traverse (50) délimitant, avec le rouleau transversal (46), un passage (52) pour la feuille (12).

5. Dispositif de thermoformage (10) selon l'une quelconque des revendications 2 à 4, dans lequel la tête mobile (34) comporte des moyens (54) de détection d'un contact entre cette tête mobile (34) et l'outil de conformage (18), l'ensemble de convoyage (22) comportant des moyens pour désactiver les moyens (38) d'entraînement en rotation de la tête (34) lorsqu'un contact est détecté.

6. Dispositif de thermoformage (10) selon la revendication 5, dans lequel les moyens de détection de contact (54) comportent :
- une partie (56) mobile en rotation autour d'une liaison pivot (58) avec les flasques (44) de la tête (34), entre une position angulaire basse et une position angulaire haute, comprenant une traverse de sécurité (64) s'étendant sensiblement parallèlement au rouleau transversal (56),
- au moins un interrupteur (66), porté par au moins l'une des flasques (44) de la tête (34), destiné à coopérer avec la partie mobile (56) lorsque celle-ci se déplace depuis sa partie angulaire basse jusqu'à sa partie angulaire haute.

7. Dispositif de thermoformage (10) selon l'une quelconque des revendications précédentes, dans lequel les moyens (38) d'entraînement en rotation de la tête (34) sont programmables, notamment pour que la tête (34) suive un trajet (70) correspondant sensiblement à un profil de l'outil de conformage (18) lorsque le tablier (24) se déplace depuis sa seconde position en direction de sa première position, de sorte que la distance entre le rouleau transversal (46) et l'outil (18) reste sensiblement constante.

8. Dispositif de thermoformage (10) selon l'une quelconque des revendications précédentes, pour le thermoformage d'une feuille en matériau de type « masse lourde ».

## Patentansprüche

1. Vorrichtung (10) zur Wärmeverformung einer Vormaterial-Platte (12), des Typs aufweisend:
- Mittel (14) zur Erwärmung der Platte (12),
- ein Formgebungs-Werkzeug (18), auf welches die Platte (12) nach der Erwärmung anzuordnen bestimmt ist und welches im Wesentlichen unterhalb der Erwärmungs-Mittel (14) angeordnet ist, und
- eine Einrichtung (22) zum Transport der Platte (12), aufweisend:
• eine Transportplatte (24) von im Wesentlichen ebener Form, die sich zwischen einem ersten (24A) und einem zweiten (24B) Ende längserstreckt,
• ein Transportband (26), das von der Transportplatte (24) getragen wird und das bezüglich der Transportplatte (24) bewegbar ist und das dazu bestimmt ist, die wärmeumzuformende Platte (12) aufzunehmen und die besagte Platte (12) zwischen dem ersten (24A) und dem zweiten (24B) Ende der Transportplatte (24) zu transportieren,
wobei die Transportplatte (24) bezüglich einem Halter (28) der Transport-Einrichtung (22) translatorisch bewegbar ist zwischen einer ersten Position zum Aufladen einer Platte (12) auf das Transportband (26) in der Nähe des ersten Endes (24A) der Transportplatte (24) und einer zweiten Position zum Erwärmen der Platte (12), in welcher das zweiten Ende (24B) der Transportplatte (24) in der Nähe der Erwärmungs-Mittel (14) angeordnet ist, **dadurch gekennzeichnet, dass** die Transport-Einrichtung (22) aufweist:
- einen Kopf (34), der an dem zweiten Ende (24B) der Transportplatte (24) angeordnet ist, wobei der Kopf (34) um eine transversale Achse (36) herum drehbewegbar ist,
- Mittel (38) zum Drehantreiben des Kopfs (34), die in der Lage sind, den Kopf (34) um die transversale Achse (36) zu kippen, insbesondere in Richtung des Formgebungs-Werkzeugs (18).

2. Vorrichtung zur Wärmeverformung (10) gemäß Anspruch 1, wobei der bewegbare Kopf (34) aufweist:
- zwei laterale Flansche (44), die jeweils eine Gestalt haben, die zwischen einem Ende (44A), das über eine um die besagte transversale Achse (36) herum vorliegende Drehverbindung mit der Transportplatte (24) verbunden ist, und einem freien Ende (44B) langgestreckt ist,
- eine transversale, bevorzugt motorgetriebene, Rolle (46), die über eine Drehverbindung mit dem freien Ende (44B) jedes lateralen Flansches (44) verbunden ist.

3. Vorrichtung zur Wärmeverformung (10) gemäß Anspruch 2, wobei die transversale Rolle (46) einen Innendurchmesser hat, der kleiner als 80 mm ist.

4. Vorrichtung zur Wärmeverformung (10) gemäß Anspruch 2 oder 3, wobei jeder laterale Flansch (44) des bewegbaren Kopfs (34) eine Erweiterung (48) an seinem freien Ende (44B) aufweist, wobei der bewegbare Kopf (34) eine Traverse (50) aufweist, die sich zwischen den Erweiterungen (48) dieser lateralen Flansche (44) erstreckt, wobei die besagte Traverse (50) mit der transversalen Rolle (46) eine Passage (52) für die Platte (12) begrenzt.

5. Vorrichtung zur Wärmeverformung (10) gemäß irgendeinem der Ansprüche 2 bis 4, wobei der besagte bewegbare Kopf (34) aufweist Mittel (54) zur Detektion eines Kontakts zwischen diesem bewegbaren Kopf (34) und dem Formgebungs-Werkzeug (18), wobei die Transport-Einrichtung (22) aufweist Mittel zum Deaktivieren der Mittel (38) zum Drehantreiben des Kopfs (34), wenn ein Kontakt detektiert ist.

6. Vorrichtung zur Wärmeverformung (10) gemäß Anspruch 5, wobei die Detektions-Mittel (54) aufweisen:
- einen Abschnitt (56), der um eine Drehverbindung (58) mit den Flanschen (44) des Kopfs (34) herum dreh-bewegbar ist zwischen einer niedrigen Winkelposition und einer hohen Winkelposition und der eine Sicherheitstraverse (64) aufweist, die sich im Wesentlichen parallel zur transversalen Rolle (56) erstreckt,
- wenigstens einen Unterbrecher (66), der von wenigstens einem der Flansche (44) des Kopfs (34) getragen wird und der bestimmt ist, mit dem bewegbaren Abschnitt (56) zusammenzuwirken, wenn dieser sich von seinem niedrigen Winkelteil aus bis zu seinem hohen Winkelteil hin verlagert.

7. Vorrichtung zur Wärmeverformung (10) gemäß irgendeinem der vorhergehenden Ansprüche, wobei die Mittel (38) zum Drehantreiben des Kopfs (34) programmierbar sind, insbesondere damit der Kopf (34) einer Bahn (70) folgt, die im Wesentlichen zu einem Profil des Formgebungswerkzeugs (18) korrespondiert, wenn sich die Transportplatte (24) von ihrer zweiten Position aus in Richtung zu ihrer ersten Position verlagert, sodass die Distanz zwischen der transversalen Rolle (46) und dem Werkzeug (18) im Wesentlichen konstant bleibt.

8. Vorrichtung zur Wärmeverformung (10) gemäß irgendeinem der vorhergehenden Ansprüche, zur Wärmeverformung einer Platte aus einem Vormaterial des Typs "Schwere Masse".

## Claims

1. A thermoforming device (10) for a sheet of material (12), of the type including:
- means (14) for heating the sheet (12),
- a molding tool (18), on which the sheet (12) is designed to be placed after heating, arranged substantially below the heating means (14), and
- a conveyor assembly (22) for the sheet (12), comprising:
• an apron (24), with a substantially planar shape, extending longitudinally between first (24A) and second (24B) ends,
• a conveyor belt (26), supported by the apron (24), and movable relative to that apron (24), designed to receive the sheet (12) to be thermoformed, and to convey said sheet (12) between the first (24A) and second (24B) ends of the apron (24),
wherein the apron (24) is translatable relative to a support (28) of the conveyor assembly (22), between a first position for loading a sheet (12) on the conveyor belt (26) near the first end (24A) of the apron (24), and a second position for heating the sheet (12), in which the second end (24B) of the apron (24) is positioned near the heating means (14),
**characterized in that** the conveyor assembly (22) includes:
- a head (34) arranged at the second end (24B) of the apron (24), said head (34) being rotatable around a transverse axis (36),
- means (38) for driving the rotation of the head (34), capable of tilting the head (34) around the transverse axis (36), in particular toward the molding tool (18).

2. The thermoforming device (10) according to claim 1, wherein the movable head (34) includes:
- two side flanges (44), each having an elongated shape between an end (44A) connected to the apron (24) by a pivot link around said transverse axis (36), and a free end (44B),
- a transverse roller (46), preferably motorized, connected to the free end (44B) of each side flange (44) by a pivot link.

3. The thermoforming device (10) according to claim 2, wherein the transverse roller (46) has a diameter smaller than 80 mm.

4. The thermoforming device (10) according to claim 2 or 3, wherein each side flange (44) of the movable head (34) comprises an extension (48) of its free end (44B), the movable head (34) including a crosspiece (50) extending between the extensions (48) of those side flanges (44), said crosspiece (50) delimiting, with the transverse roller (46), a passage (52) for the sheet (12).

5. The thermoforming device (10) according to any one of claims 2 to 4, wherein the movable head (34) includes means (54) for detecting a contact between that movable head (34) and the molding tool (18), the conveyor assembly (22) including means for deactivating the means (38) for driving the rotation of the head (34) when a contact is detected.

6. The thermoforming device (10) according to claim 5, wherein the contact detection means (54) include:
- a part (56) rotatable around a pivot link (58) with the flanges (44) of the head (34), between a lower angular position and an upper angular position, comprising a safety crosspiece (64) extending substantially parallel to the transverse roller (56),
- at least one switch (66), supported by at least one of the flanges (44) of the head (34), designed to cooperate with the movable part (56) when the latter moves from its lower angular part to its upper angular part.

7. The thermoforming device (10) according to any one of the preceding claims, wherein the means (38) for driving the rotation of the head (34) are programmable, in particular so that the head (34) follows a trajectory (70) corresponding substantially to a profile of the molding tool (18) when the apron (24) moves from its second position toward its first position, such that the distance between the transverse roller (46) and the tool (18) remains substantially constant.

8. The thermoforming device (10) according to any one of the preceding claims, in order to thermoform a sheet of material of the "heavy mass" type.
